# EUROPEAN PATENT APPLICATION

(11) **EP 2 733 027 A1**
(43) Date of publication of application: **21.05.2014**
(21) Application number: 12382450.0
(22) Date of filing: 15.11.2012
(51) Int. Cl.: B60S 1/38, B60S 1/40

(54) **System for connecting a wiper blade to a windshield wiper arm**

(71) Applicant: Doga S.A., 08630 Abrera (ES)
(72) Inventor: Chicón Montoya, Carlos, 08630 ABRERA (ES); Alcaine santamaria, Manuel, 08630 ABRERA (ES)
(74) Representative: Oficina Ponti, SLP

(57) **Abstract**

System for connecting a wiper blade (1) to a windshield wiper arm (2), comprising a coupling device (3) attached to the blade (1) in its central part, and an adaptor device (4, 4a) attachable to said coupling device (3) and capable to be inserted in the grooved end of said wiper arm (2) by means of mutual fitting means, said fitting means including a retainer element (7) projecting through a flexible tab (8), said retainer element (7) being capable to be inserted by fitting it into a housing (9) made in the grooved end of said wiper arm (2). The adaptor device (4, 4a) further comprises a push button (10) associated to said tab (8) of the retainer element (7) and joined to the body of the adaptor device (4, 4a) by means of a weakened section (11) that controls its flexion, said push button (10) being capable to actuate the retainer element (7) to force the disconnection of the adaptor device (4, 4a) with the blade (1) from the wiper arm (2).

## Description

The present invention relates to a system for connecting a wiper blade to a windshield wiper arm.

In particular, the connection system of the invention is applicable to blades that, being formed by a rubber profile, are intimately and elastically assembled by respective elastically arched steel straps, in which central part there is a coupling device suitable to receive an adaptor device for the set of the blade and the swivel-arm which actuates thereof.

The adaptor device of the invention is of the kind that is specifically applicable to rubber blades like the ones described above which have a coupling device consisting of an oblong single piece made of rigid material that makes up two equal oblong ears, whose function is to allow the pivoting of the adaptor element. On the other hand, the swivel arm that actuates said wiper blade is provided with a grooved profile with an inverted "C" shape on its free end, provided with fitting means to fit complementary fitting means of said adaptor device.

### Background of the invention

Known windshield wipers include a blade coupled to a wiper arm by means of a suitable adaptor device. The blades are formed by a rubber profile, intimately and elastically assembled by respective elastically arched steel straps, which are provided with central grooves in their longitudinal outer edges to mount a coupling device, which is fitted to receive said adaptor device for the blade and the swivel arm which actuates thereof.

Utility model ES 106 43 26, by the same applicant of the present application, describes a windshield wiper for vehicles which includes a blade of the type described above, provided with triangular hollow profiles of straight section with a symmetrically inverted "V" configuration, and a suspension box mounted to the blade and coupled in turn to a trim element that acts as an adaptor device for the swivel arm.

In this case, the suspension box is formed by a piece intended to be fitted in the frame of the rubber blade, and includes a cross pin for anchoring of the connection trim intended to serve as a base for the insertion of the swivel arm of the windshield wiper.

This type of suspension boxes have the disadvantage of needing a projecting cross pin and an adaptor device made of plastic or the like for the swivel arm of the windshield wiper with the aim of preventing contact between two pieces of metal in articulated contact.

Utility model ES 10715 43, by the same applicant of the present application, describes an adaptor device that solves the above mentioned disadvantage because the suspension box is replaced by an improved coupling device. Said coupling device is formed by an oblong single piece made of rigid material that forms respective equal oblong ears intended to the connection of the adaptor device, and that it also configures, transversely in opposition, projecting arms with their ends curved in order to staple them into the notches of the rubber blade frames. The function of said coupling device is to allow the pivoting of the device. On the other hand, the swivel arm is of the kind that comprises a grooved profile with an inverted "C" shape on its free end, provided with fitting means to fit complementary fitting means of said adaptor device. Therefore, the adaptor device itself comprises, on the one hand, fitting means to the swivel arm and, on the other hand, joining means to the coupling device attached to the blade.

Generally, the fitting means of the adaptor device to the swivel arm consist of an appendix by way of a push button arranged in the projecting end of a longitudinal tab attached to an end of said adaptor device, being said appendix insertable in a slot made in the grooved end of the swivel arm.

To disconnect the adaptor device from the swivel arm it is necessary to press said appendix or push button, which in turn acts as a retainer, in order to force the release of said adaptor device and the blade at the same time.

Other patent documents that describe similar configurations of said coupling devices are, for example, EP2371634 A1, WO2011116995 A1, EP2326538 A1 or EP1937524 A1.

This type of coupling devices have the disadvantage of that the push button has to act as a retaining element with the swivel arm and at the same time as an actuating element for the release of the blade. This double function implies a complex structural configuration of the adaptor device, and its handling by the user turning out to be often uncomfortable.

### Description of the invention

The objective of the system for connecting a wiper blade to a windshield wiper arm of the present invention is to solve the disadvantages that the devices known in the state of the art have, providing an adaptor device with greater simplicity and ease of interaction with the user, thus facilitating the replacement of the blade.

The system for connecting a wiper blade to a windshield wiper arm, object of the present invention, is of the type applicable to blades that, being formed by a rubber profile, are intimately and elastically assembled by respective elastically arched steel straps, the wiper arm being provided with a grooved profile on its end, said connection system comprising a coupling device attached to the blade in its central part, and an adaptor device attachable to said coupling device and capable to be inserted in the grooved end of said wiper arm by means of mutual fitting means, said fitting means including a retainer element projecting through a flexible tab, said retainer element being capable to be inserted by fitting it into a housing made in the grooved end of said wiper arm, and it is **characterized in that** the adaptor device further comprises a push button associated to said tab of the retainer element and joined to the body of the adaptor device by means of a weakened section that controls its flexion, said push button being capable to actuate the retainer element to force the disconnection of the adaptor device with the blade from the wiper arm.

Therefore, the adaptor device comprises a push button that is clearly differentiated from the retainer element, in order to facilitate the removal of the blade and thus proceed to the replacement thereof in a simple and efficient manner by the end user. All this without compromising the functionality and safety of the connection system.

Also, the external geometry of the system has been greatly taken into account to make it as aesthetically pleasing as possible, and above all the edges have been smoothed so that the possible impact with pedestrians is as harmless as possible.

According to an embodiment of the present invention, the tab of the retaining element is arranged in the inner part with respect to the upper wall of the adaptor device.

According to another embodiment of the present invention, the tab of the retaining element is arranged in the outer part with respect to the upper wall of the adaptor device. Advantageously, the coupling device comprises an oblong single piece made of rigid material fitted to the blade, which comprises two symmetrical ears provided with a coupling opening intended to the pivoting of the adaptor device.

Preferably, the adaptor device comprises fitting and pivoting means that comprise two cylindrical hook pins, symmetrical with respect to the central plane of the adaptor device, intended to fit in the respective openings of the oblong ears of the coupling device, vertical inner structures intended to be in contact with the inner face of respective oblong ears, and a vertical structure formed by inner vertical walls, from which said hook pins emerge, which allow the adjustment with the outer face of respective oblong ears.

### Brief description of the drawings

In order to facilitate the description of the foregoing a set of drawings is attached in which, schematically and only by way of example but not limited to, an embodiment of the system for connecting a wiper blade to a windshield wiper arm of the invention is represented, in which:
Figure 1 shows a perspective view of the adaptor device according to a first embodiment of the present invention;
Figure 2 shows an elevational view of the adaptor device according to the first embodiment of the present invention;
Figure 3 shows a top plan view of the adaptor device according to the first embodiment of the present invention;
Figure 4 shows a longitudinal section of the adaptor device according to line IV - IV in figure 3;
Figure 5 shows a perspective view of the adaptor device according to a second embodiment of the present invention;
Figure 6 shows an elevational view of the adaptor device according to the second embodiment of the present invention;
Figure 7 shows a top plan view of the adaptor device according to the second embodiment of the present invention;
Figure 8 shows a longitudinal section of the adaptor device according to line VIII-VIII in figure 7;
Figure 9 shows a perspective view of the adaptor device according to the first embodiment, showing the fixing and pivoting means hosted in its interior;
Figure 10 shows a perspective view of the coupling device fitted into the blade, shown partially;
Figure 11 is an exploded overall view showing the adaptor device before its anchoring with the coupling device fitted into the blade and before its assembly inside the grooved end of the wiper arm;
Figure 12 is an overall view showing the adaptor device coupled to the blade and inserted into the wiper arm; and
Figure 13 shows a longitudinal section of the assembled set according to figure 12.

### Description of a preferred embodiment

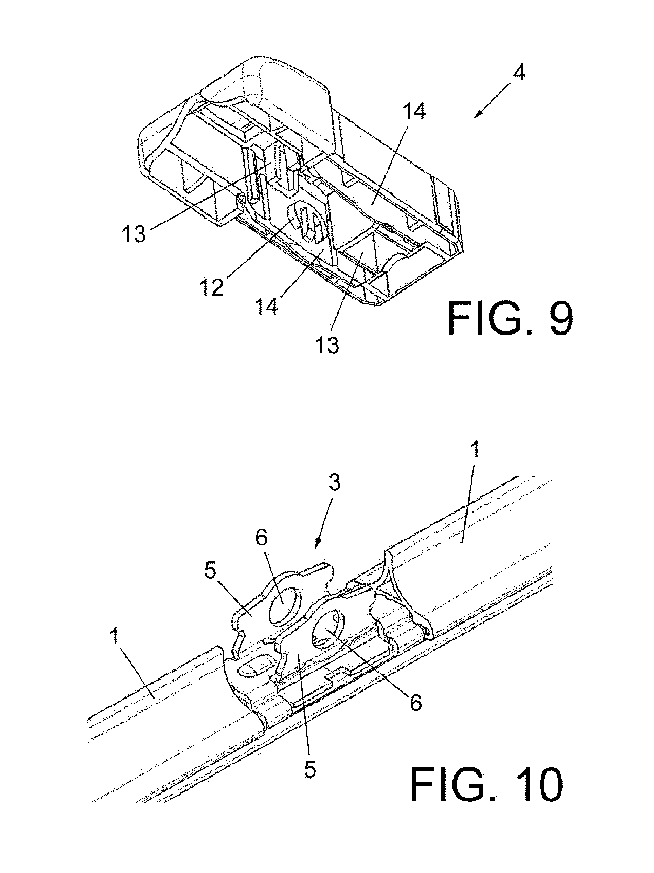

Referring to figures 10 to 13, the system for connecting a wiper blade 1 to a windshield wiper arm 2 of the present invention is of the type applicable to blades 1 which, being formed by a rubber profile, are intimately and elastically assembled by respective elastically arched steel straps. The wiper arm 2 that actuates said wiper blade 1 is provided with a grooved profile with an inverted "C" shape on its end.

Said connection system comprises a coupling a device 3 fitted in the blade 1 in its central part and an adaptor device 4 attachable to said coupling device 3 and capable to be inserted in the grooved end of said wiper arm 2 by means of mutual fitting means, as will be described with greater detail hereinafter.

The coupling device 3 is formed by an oblong single piece made of rigid material fitted to the blade 1, which comprises two symmetrical ears 5 provided with a coupling opening 6 (see figure 10) whose function is to allow the pivoting of the adaptor device 4.

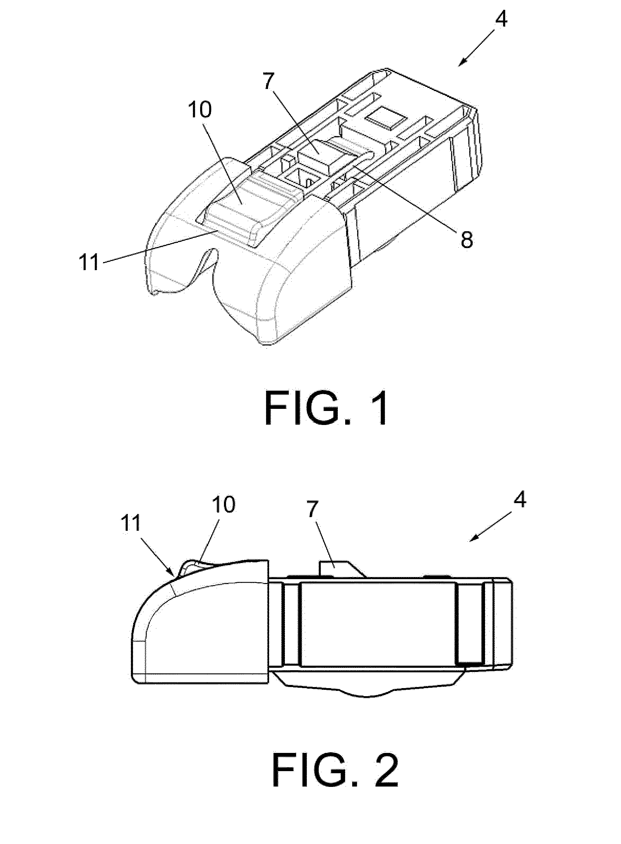

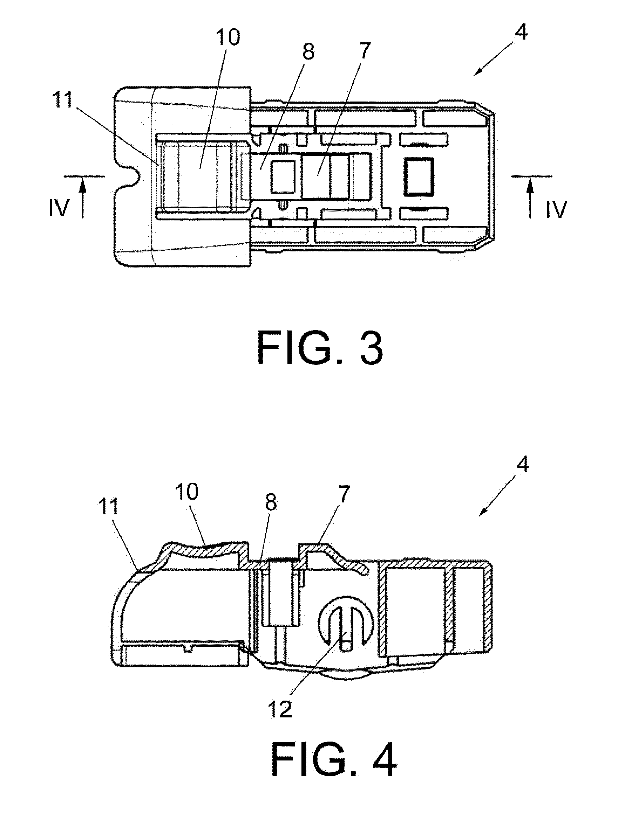

As can be seen in figures 1 to 4 and 9, the adaptor device 4 is formed by a hollow oblong body of a substantially prismatic configuration and preferably made of plastic, which is open at the bottom for its adjustment with the coupling device 3.

The fitting means of the adaptor device 4 with the wiper arm 2 comprise a retainer element 7 projecting through a flexible tab 8, said retainer element 7 being capable to be inserted by fitting it into a housing 9 made in the grooved end of said wiper arm 2. Besides, the adaptor device 4 comprises a push button 10 associated to said tab 8 of the retainer element 7 and is attached to the body of the adaptor device 4 by means of a weakened section 11 that allows controlling its flexion, said push-button 10 being capable to actuate the retainer element 7 in order to force the disconnection of the adaptor device 4 with the blade 1 from the wiper arm 2.

Therefore, the adaptor device 4 comprises a push button 10 that is clearly differentiated from the retainer element 7, in order to facilitate the removal of the blade 1 and thus proceed to the replacement thereof in a simple and efficient manner by the end user.

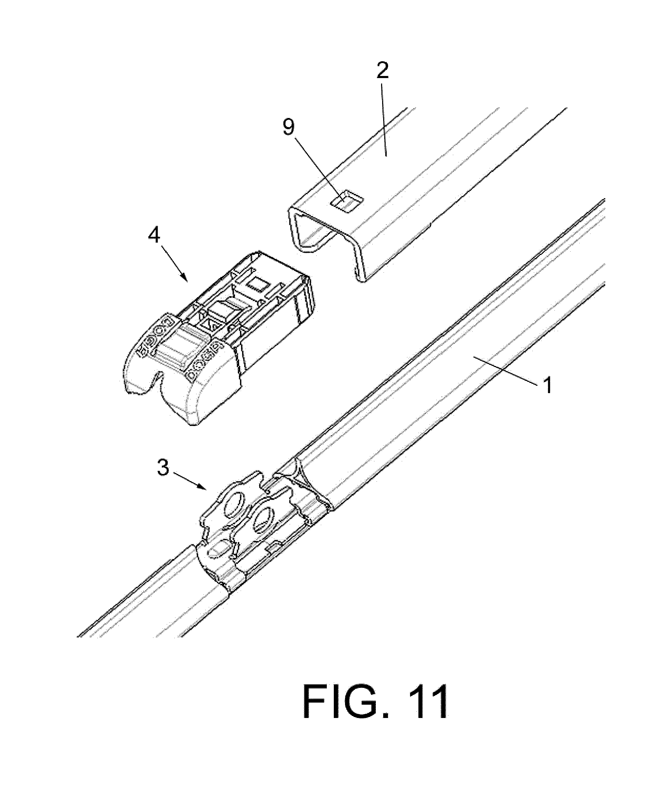

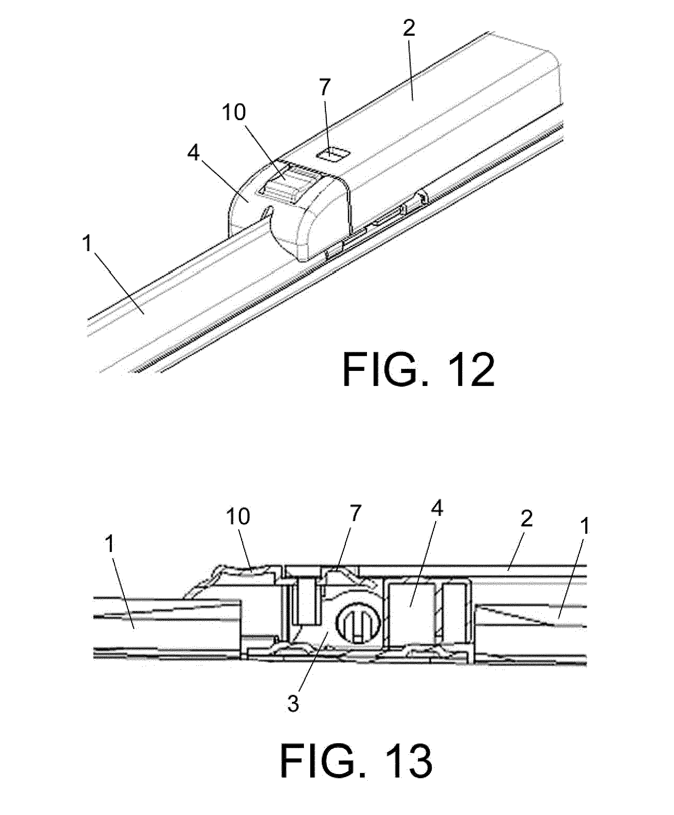

Figure 11 shows the adaptor device 4 before its anchoring with the coupling device 3 fitted to the blade 1 and before its assembly inside the grooved end of the wiper arm 2; while figures 12 and 13 show the adaptor device 4 coupled to the blade 1 and inserted in the wiper arm 2.

It should be noted that the tab 8 of the retainer element 7 can be arranged inside or outside the body of the adaptor device 4, both embodiments including the same functional elements.

According to a first embodiment shown in figures 1 to 4, the tab 8 of the retaining element 7 is arranged in the inner part with respect to the upper wall of the adaptor device 4. In this case, when the user presses the push-button 10, the retainer element 7 tends to descend until the retainer element 7 is released from the housing 9 belonging to the wiper arm 2.

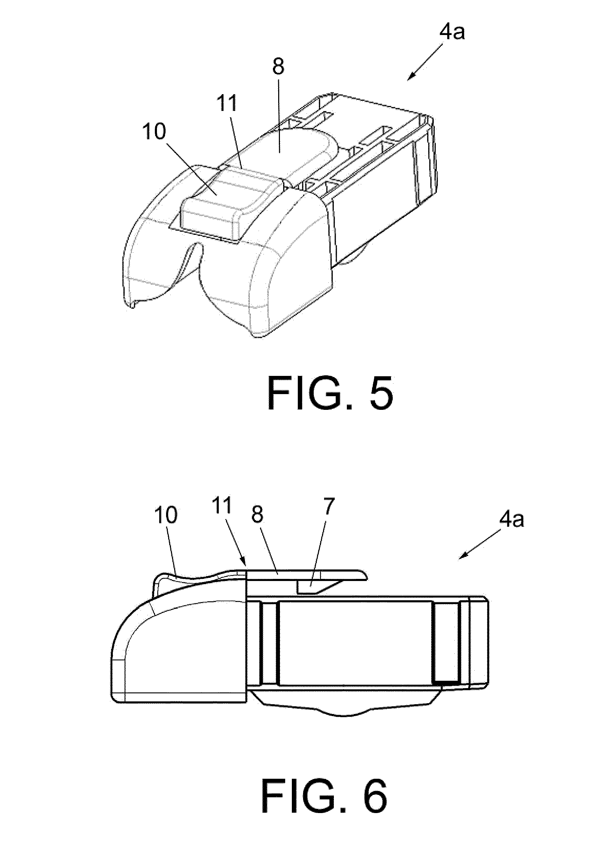

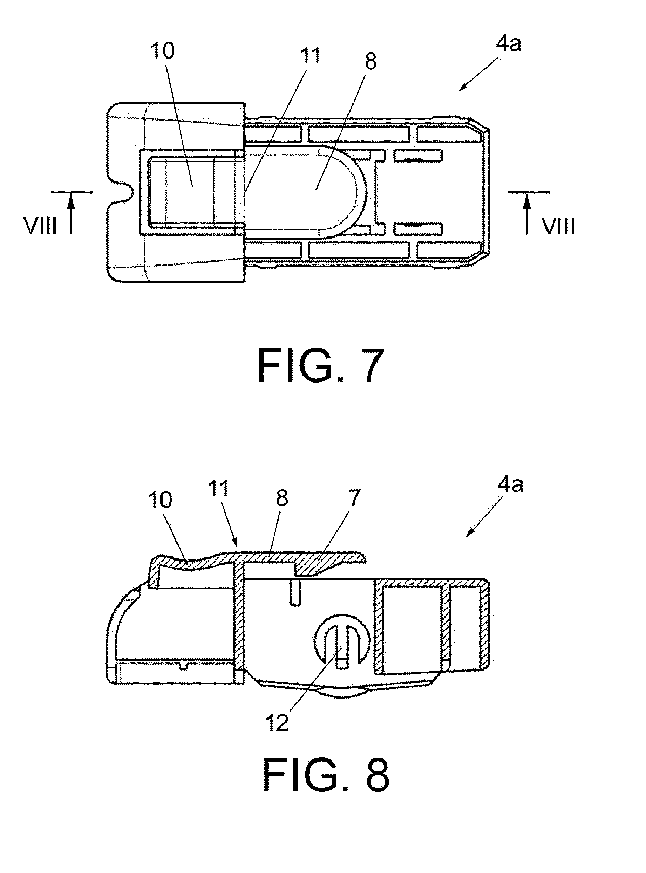

According to a second embodiment shown in figures 5 to 8, the tab 8 of the retaining element 7 is arranged in the outer part with respect to the upper wall of the adaptor device 4a. In this other case, when the user presses the push-button 10, the retainer element 7 tends to ascend until the retainer element 7 is released from the housing 9 belonging to the wiper arm 2.

On the other hand, the adaptor device 4, 4a also has the function of holding and positioning the blade 1 by means of said coupling device 3 in order to maintain an adequate position thereof during the sweeping with respect to the windscreen. For this purpose, it comprises fitting and pivoting means for the blade 1, all of them described in greater detail in utility model ES 1 071 543 by the same applicant of this application.

In summary, and referring to figures 9 and 10, said fitting and pivoting means comprise two cylindrical hook pins 12, symmetrical with respect to the central plane of the adaptor device 4, intended to fit in the respective openings 6 of the aforementioned oblong ears 5 of the coupling device 3, vertical inner structures 13 intended to be in contact with the inner face of respective oblong ears 5 in order to improve the adjustment of the adaptor device 4 with the coupling device 3, and a vertical structure formed by inner vertical walls 14, from which said hook pins 12 emerge, which allow the adjustment with the outer face of respective oblong ears 5.

Even though a preferred embodiment of the invention has been referenced, it is evident for a person skilled in the art that the system for connecting a wiper blade to a windshield wiper arm described herein is capable of numerous variations and modifications, and that all of the aforementioned details may be substituted by other, technically-equivalent ones, without departing from the scope of protection as defined by the attached claims.

## Claims

1. System for connecting a wiper blade (1) to a windshield wiper arm (2), of the type applicable to blades (1) that, being formed by a rubber profile, are intimately and elastically assembled by respective elastically arched steel straps, the wiper arm (2) being provided with a grooved profile on its end, said connection system comprising a coupling device (3) attached to the blade (1) in its central part, and an adaptor device (4, 4a) attachable to said coupling device (3) and capable to be inserted in the grooved end of said wiper arm (2) by means of mutual fitting means, said fitting means including a retainer element (7) projecting through a flexible tab (8), said retainer element (7) being capable to be inserted by fitting it into a housing (9) made in the grooved end of said wiper arm (2), **characterized in that** the adaptor device (4, 4a) further comprises a push button (10) associated to said tab (8) of the retainer element (7) and joined to the body of the adaptor device (4, 4a) by means of a weakened section (11) that controls its flexion, said push button (10) being capable to actuate the retainer element (7) to force the disconnection of the adaptor device (4, 4a) with the blade (1) from the wiper arm (2).

2. System for connecting a wiper blade (1), according to claim 1, wherein the tab (8) of the retaining element (7) is arranged in the inner part with respect to the upper wall of the adaptor device (4).

3. System for connecting a wiper blade (1), according to claim 1, wherein the tab (8) of the retaining element (7) is arranged in the outer part with respect to the upper wall of the adaptor device (4a).

4. System for connecting a wiper blade (1), according to claim 1, wherein the coupling device (3) comprises an oblong single piece made of rigid material fitted to the blade (1), which comprises two symmetrical ears (5) provided with a coupling opening (6) intended to the pivoting of the adaptor device (4, 4a).

5. System for connecting a wiper blade (1), according to claim 4, wherein the adaptor device (4, 4a) comprises fitting and pivoting means that comprise two cylindrical hook pins (12), symmetrical with respect to the central plane of the adaptor device (4, 4a), intended to fit in the respective openings (6) of the oblong ears (5) of the coupling device (3), vertical inner structures (13) intended to be in contact with the inner face of respective oblong ears (5), and a vertical structure formed by inner vertical walls (14), from which said hook pins (12) emerge, which allow the adjustment with the outer face of respective oblong ears (5).
